(19) Europäisches Patentamt
European Patent Office
Office européen des brevets

(11) **EP 2 677 583 A1**

(12) **EUROPEAN PATENT APPLICATION**
published in accordance with Art. 153(4) EPC

(43) Date of publication:
**25.12.2013 Bulletin 2013/52**

(51) Int Cl.:
**H01M 8/04** (2006.01)    **H01M 8/06** (2006.01)

(21) Application number: **12746733.0**

(22) Date of filing: **13.02.2012**

(86) International application number:
**PCT/JP2012/053302**

(87) International publication number:
**WO 2012/111629 (23.08.2012 Gazette 2012/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2011   JP 2011031011**

(71) Applicant: **JX Nippon Oil & Energy Corporation
Chiyoda-ku
Tokyo 100-8162 (JP)**

(72) Inventors:
• **TSUKAGOSHI Shouichi
   Tokyo 100-8162 (JP)**
• **SADAKANE Osamu
   Tokyo 100-8162 (JP)**

(74) Representative: **Grünecker, Kinkeldey,
Stockmair & Schwanhäusser
Leopoldstrasse 4
80802 München (DE)**

(54) **FUEL CELL SYSTEM**

(57)    A fuel cell system includes: a hydrogen generating unit that generates hydrogen-containing gas using fuel that contains hydrogen-containing fuel; a cell stack that performs power generation using the hydrogen-containing gas; a supply amount acquiring unit that acquires a supply amount of the fuel supplied to the hydrogen generating unit; a detecting unit that is disposed on an upstream side of the hydrogen generating unit so as to detect oxygen or nitrogen in the fuel; a correcting unit that corrects an error included in a value from the supply amount acquiring unit based on detection results of the detecting unit, and acquires the supply amount of the fuel including air; and a calculating unit that ealeulates an amount of the air contained in the fuel based on detection results of the detecting unit.

**Fig.1**

## Description

## Technical Field

The present invention relates to a fuel cell system.

## Background Art

Patent Literature 1 discloses a conventional fuel cell system. This fuel cell system includes gas concentration detection means for detecting the concentration of a partial component of methane-series hydrocarbon in fuel gas, fuel flow rate calculation means for calculating a total calorific value in the fuel gas from the gas concentration detected by the gas concentration detection means and calculating a fuel flow rate from the total calorific value, and fuel gas flow rate adjustment means for adjusting fuel gas flow rate appropriate for operation from the fuel flow rate. This fuel cell system deals with a seasonal variation of the fuel gas by adjusting the fuel gas flow rate based on the fuel gas concentration.

## Citation List

## Patent Literature

  Patent Literature 1: Japanese Patent Application Laid-open No. 9-320625

Here, a supply source that supplies hydrogen-containing fuel sometimes supplies hydrogen-containing fuel to the fuel cell system with air mixed therein when a supply pressure decreases in order to maintain a constant supply pressure. In such a case, the conventional fuel cell system can deal with specific fuel only and cannot accurately detect the flow rate of the hydrogen-containing fuel in which air is mixed. Thus, there is a problem in that the fuel cell system cannot perform a heat independent operation.

## Summary of Invention

## Technical Problem

The present invention has been made to solve the above-described problems, and an object of the present invention is to provide a fuel cell system capable of performing a heat independent operation even when hydrogen-containing fuel is supplied with air mixed therein.

## Solution to Problem

According to an aspect of the present invention, there is provided a a fuel cell system including: a hydrogen generating unit that generates hydrogen-containing gas using fuel that contains hydrogen-containing fuel; a cell stack that performs power generation using the hydrogen-containing gas; a supply amount acquiring unit that acquires a supply amount of the fuel supplied to the hydrogen generating unit; a detecting unit that is disposed on an upstream side of the hydrogen generating unit so as to detect oxygen or nitrogen in the fuel; a correcting unit that corrects an error included in a value from the supply amount acquiring unit based on detection results of the detecting unit, and acquires the supply amount of the fuel including air; and a calculating unit that calculates an amount of the air contained in the fuel based on detection results of the detecting unit.

The fuel cell system includes the correcting unit. The correcting unit corrects the error included in the value from the supply  amount acquiring unit, whereby the accurate supply amount of the fuel can be obtained when air is contained in the fuel. Moreover, the fuel cell system includes the calculating unit that calculates the amount of the air contained in the fuel based on the detection results of the detecting unit that detects oxygen or nitrogen. Thus, when air is contained in the fuel supplied to the hydrogen generating unit, the fuel cell system can understand how much air is mixed in the hydrogen-containing fuel in the fuel. In this manner, the fuel cell system can appropriately adjust the supply amount of the fuel according to the amount of mixed air. Therefore, the fuel cell system can perform a heat independent operation even when hydrogen-containing fuel is supplied in a state where air is mixed therein.

The fuel cell system may further include an adjusting unit that adjusts the supply amount of the fuel based on an amount of the air contained in the fuel, and the adjusting unit may adjust the supply amount by taking an amount of the hydrogen-containing fuel that decreases due to the air contained in the fuel, into consideration. When fuel that contains air is compared with fuel that does not contain air, if the fuel amount is the same, the amount of hydrogen-containing fuel in the fuel that contains air is decreased by the amount of air. The adjusting unit can adjust the fuel by taking the amount of hydrogen-containing fuel that decreases due to such a reason, into consideration. In this manner, it is possible to reliably supply a required amount of hydrogen-containing fuel when the hydrogen-containing fuel is supplied in a state where air is mixed therein.

The fuel cell system may further include an adjusting unit that adjusts the supply amount of the fuel based on an amount of the air contained in the fuel, and the adjusting unit may adjust the supply amount by taking an amount of the hydrogen-containing fuel required for consuming the oxygen in the fuel, into consideration. When air is contained in the fuel, an additional amount of hydrogen-containing fuel for consuming the oxygen in the air is required. Thus, the adjusting unit can adjust the amount of fuel by taking the amount of hydrogen-containing fuel required for consuming the oxygen in the fuel, into consideration. In this manner, the fuel cell system can perform a heat independent operation in a more appropriate manner when hydrogen-containing fuel is supplied in a state where air is mixed therein.

The fuel cell system may further include an abnormality detecting unit that detects an abnormality in fuel supply according to an amount of the air contained in the fuel, and the abnormality detecting unit may interrupt the system when detecting an abnormality in the fuel supply. In this manner, it is possible to deal with a situation where too much air is contained in the fuel.

In the fuel cell system, the abnormality detecting unit may determine a ratio of an air flow rate to a fuel flow rate obtained by the correcting unit and the calculating unit, and detect an abnormality in the fuel supply when the ratio exceeds a predetermined threshold value. In this manner, it is possible to detect an abnormality in the fuel supply more accurately.

**Advantageous Effects of Invention**

According to the present invention, the fuel cell system can perform a heat independent operation even when hydrogen-containing fuel is supplied with air mixed therein.

**Brief Description of Drawings**

Fig. 1 is a block diagram showing a configuration of a fuel cell system according to an embodiment of the present invention.
Fig. 2 is a block diagram showing a configuration of a control unit.
Fig. 3 is a flowchart showing the content of a control process of the fuel cell system according to the embodiment of the present invention.

**Description Embodiments**

Hereinafter, preferred embodiments of the present invention will be described in detail with reference to the drawings. In the drawings, the same or corresponding portions will be denoted by the same reference numerals and redundant description thereof will not be provided.

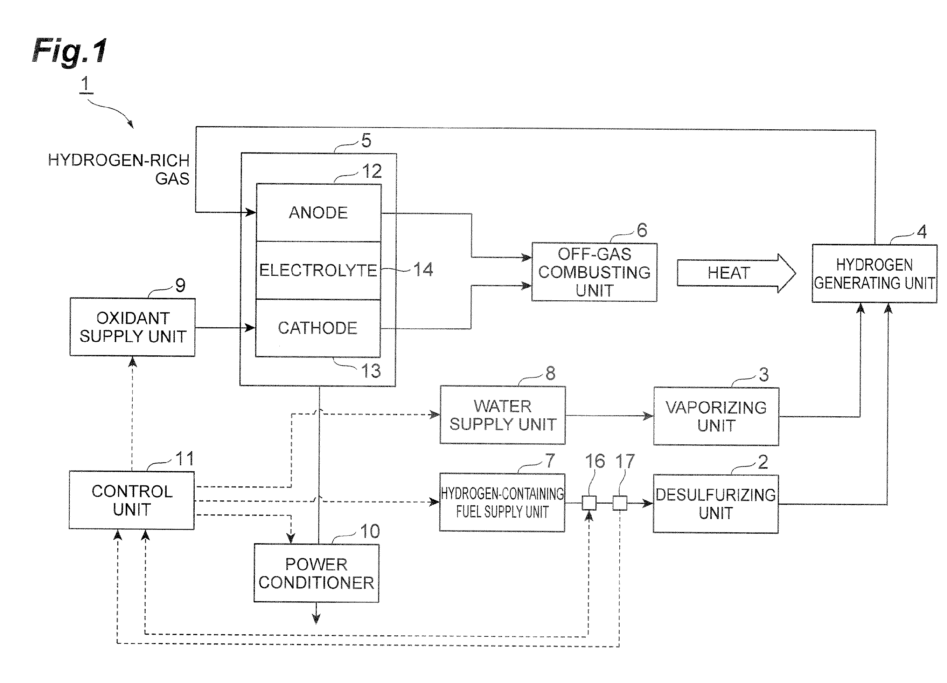

As shown in Fig. 1, a fuel cell system 1 includes a desulfurizing unit 2, a vaporizing unit 3, a hydrogen generating unit 4, a cell stack 5, an off-gas combusting unit 6, a hydrogen-containing fuel supply unit 7, a water supply unit 8, an oxidant supply unit 9, a power conditioner 10, and a control unit 11. In the fuel cell system 1, the cell stack 5 performs power generation using hydrogen-containing fuel and oxidant. The type of the cell stack 5 in the fuel cell system 1 is not particularly limited, and for example, a polymer electrolyte fuel cell (PEFC), a solid oxide fuel cell (SOFC), a phosphoric acid fuel cell (PAFC), a molten carbonate fuel cell (MCFC), and other types of fuel cells can be used. The constituent components shown in Fig. 1 may be appropriately omitted depending on the type of the cell stack 5, the type of hydrogen-containing fuel, a reforming method, and the like.

As the hydrogen-containing fuel, hydrocarbon-based fuel is used, for example. As the hydrocarbon-based fuel, compounds containing carbon and hydrogen (the compounds may contain other elements such as oxygen) in their molecules and mixtures thereof are used. Examples of the hydrocarbon-based fuel include hydrocarbons, alcohols, ethers, and biofuel, and hydrocarbon-based fuels that originate from existing fossil fuels such as petroleum or coal, that originate from synthetic fuels such as synthetic gas, and that originate from biomass can be appropriately used. Specifically, examples of hydrocarbons include ethane, ethane, propane, butane, natural gas, liquefied petroleum gas (LPG), city gas, town gas, gasoline, naphtha, kerosene, and gas oil. Examples of alcohols include methanol and ethanol. Examples of ethers include dimethyl ether. Examples of biofuel include biogas, bioethanol, biodiesel, and bio jet.

As the oxidant, air, pure oxygen gas (may contain impurities that are rarely removed by a general removal method), and oxygen-enriched air are used.

The desulfurizing unit 2 desulfurizes the hydrogen-containing fuel supplied to the hydrogen generating unit 4. The desulfurizing unit 2 has a desulfurizing catalyst for removing sulfurated compounds contained in the hydrogen-containing fuel. As a desulfurization method of the desulfurizing unit 2, an adsorptive desulfurization method of adsorbing and removing sulfurated compounds and a hydrodesulfurization method of allowing sulfurated compounds to react with hydrogen to remove the sulfurated compounds are used, for example. The desulfurizing unit 2 supplies the desulfurized hydrogen-containing fuel to the hydrogen generating unit 4.

The vaporizing unit 3 generates steam supplied to the hydrogen generating unit 4 by heating and vaporizing water. When water is heated by the vaporizing unit 3, heat generated within the fuel cell system 1 such as heat of the hydrogen generating unit 4, heat of the off-gas combusting unit 6, or heat recovered from exhaust gas may be used. Moreover, water may be heated using additional heat sources such as a heater or a burner. Although only the heat supplied from the off-gas combusting unit 6 to the hydrogen generating unit 4 is illustrated as an example in Fig. 1, the present invention is not limited to this. The vaporizing unit 3 supplies the generated steam to the hydrogen generating unit 4.

The hydrogen generating unit 4 generates hydrogen-rich gas using the hydrogen-containing fuel from the desulfurizing unit 2. The hydrogen generating unit 4 has a reformer that reforms the hydrogen-containing fuel using a reforming catalyst. A reforming method used in the hydrogen generating unit 4 is not particularly limited, and for example, steam reforming, partial oxidation reforming, autothermal reforming, and other reforming methods can be used. The hydrogen generating unit 4 may include a configuration for adjusting properties in addition to the reformer that reforms the hydrogen-containing fuel using the reforming catalyst depending on the  properties of the hydrogen-rich gas required for the cell stack 5. For example, when the type of the cell stack 5 is a polymer electrolyte fuel cell (PEFC) or a phosphoric acid fuel cell (PAFC), the hydrogen generating unit 4 includes a configuration (for example, a shift reactor and a selective oxidation reactor) for removing carbon monoxides in the hydrogen-rich gas. The hydrogen generating unit 4 supplies the hydrogen-rich gas to an anode 12 of the cell stack 5.

The cell stack 5 performs power generation using the hydrogen-rich gas from the hydrogen generating unit 4 and the oxidant from the oxidant supply unit 9. The cell stack 5 includes the anode 12 to which the hydrogen-rich gas is supplied, a cathode 13 to which the oxidant is supplied, and an electrolyte 14 disposed between the anode 12 and the cathode 13. The cell stack 5 supplies electric power to the outside via the power conditioner 10. The cell stack 5 supplies hydrogen-rich gas and oxidant that were not used for power generation to the off-gas combusting unit 6 as off-gas. A combusting unit (for example, a combustor or the like that heats the reformer) included in the hydrogen generating unit 4 may be used as the off-gas combusting unit 6.

The off-gas combusting unit 6 combusts the off-gas supplied from the cell stack 5. The heat generated by the off-gas combusting unit 6 is supplied to the hydrogen generating unit 4 and is used for generation of the hydrogen-rich gas in the hydrogen generating unit 4.

The hydrogen-containing fuel supply unit 7 supplies the hydrogen-containing fuel to the desulfurizing unit 2. The water supply unit 8 supplies water to the vaporizing unit 3. The oxidant supply unit  9 supplies the oxidant to the cathode 13 of the cell stack 5. The hydrogen-containing fuel supply unit 7, the water supply unit 8, and the oxidant supply unit 9 are configured as a pump, for example, and are driven based on a control signal from the control unit 11.

The power conditioner 10 adjusts the electric power from the cell stack 5 according to a power consumption state on the outside. The power conditioner 10 performs a process of converting a voltage and a process of converting a DC power into an AC power, for example.

The control unit 11 performs a process of controlling the entire fuel cell system 1. The control unit 11 is configured as a device that includes a central processing unit (CPU), a read only (ROM), a random access memory (RAM), and an input/output interface. The control unit 11 is electrically connected to the hydrogen-containing fuel supply unit 7, the water supply unit 8, the oxidant supply unit 9, the power conditioner 10, and other sensors and auxiliary devices (not shown). The control unit 11 acquires various signals generated within the fuel cell system 1 and outputs a control signal to respective devices in the fuel cell system 1.

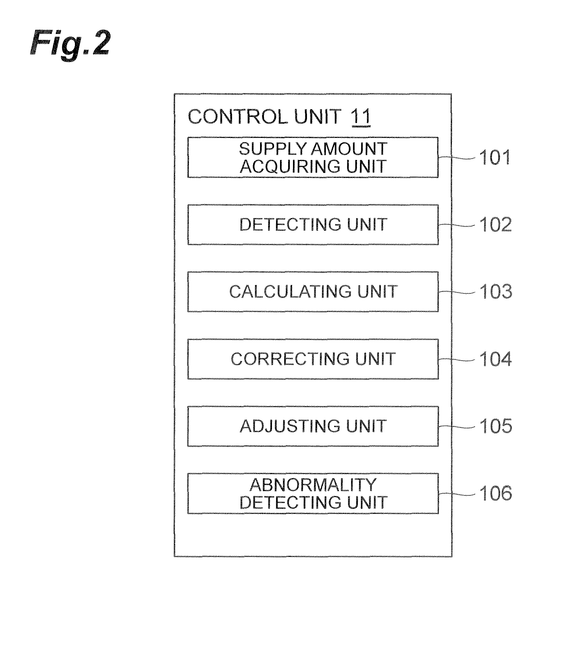

A supply source (for example, a pipe line) that supplies fuel to the fuel cell system 1 may sometimes supply hydrogen-containing fuel with air mixed therein in order to increase the supply pressure. In this case, air is also mixed in the hydrogen-containing fuel supplied from the hydrogen-containing fuel supply unit 7 to the hydrogen generating unit 4. The fuel cell system 1 according to the present embodiment can appropriately perform a heat independent operation even when air is mixed in the hydrogen-containing fuel. In the following description, the one that is supplied from the hydrogen-containing fuel supply unit 7 to the hydrogen generating unit 4 will be referred to as "fuel". The fuel may contain at least the hydrogen-containing fuel, may be air-containing fuel in which air is mixed in the hydrogen-containing fuel, and may not contain air. The fuel cell system 1 further includes a fuel flow meter 16 that detects a supply amount of fuel and a sensor 17 that detects oxygen or nitrogen in the fuel. As shown in Fig. 2, the control unit 11 includes a supply amount acquiring unit 101, a detecting unit 102, a calculating unit 103, a correcting unit 104, an adjusting unit 105, and an abnormality detecting unit 106.

The fuel flow meter 16 is disposed on the upstream side of the hydrogen generating unit 4. In Fig. 1, although the fuel flow meter 16 is disposed between the hydrogen-containing fuel supply unit 7 and the desulfurizing unit 2, the fuel flow meter 16 may be disposed at any position if the fuel flow meter 16 is located upstream the hydrogen generating unit 4. The fuel flow meter 16 detects a flow rate of the fuel supplied from the hydrogen-containing fuel supply unit 7. Since the fuel flow meter 16 is optimized for measuring the flow rate of specific gas, if the fuel is air-mixed fuel in which hydrogen-containing fuel and air are mixed, the flow rate (a value in which an air flow rate is added to the flow rate of hydrogen-containing fuel itself) of the air-mixed fuel indicated by the fuel flow meter 16 may have an error. The results of the fuel flow meter 16 do not indicate the accurate flow rate of the air-mixed fuel nor indicate the accurate flow rate of the hydrogen-containing fuel included in the air-mixed fuel, and thus, the measurement results of the fuel flow meter 16 cannot be used for control as they are. The fuel cell system 1 according to the present embodiment can correct the error of the fuel flow meter 16 using the correcting unit 104 of the control unit 11. By performing such correction, the measurement results that indicate the accurate flow rate of the air-mixed fuel can be used for control.

The sensor 17 is disposed on the upstream side of the hydrogen generating unit 4. In Fig. 1, although the sensor 17 is disposed between the hydrogen-containing fuel supply unit 7 and the desulfurizing unit 2, the sensor 17 may be disposed at any position if the sensor 17 is upstream the hydrogen generating unit 4. The sensor 17 detects oxygen or nitrogen contained in the fuel supplied from the hydrogen-containing fuel supply unit 7. Any one or both of an oxygen sensor and a nitrogen sensor may be disposed as the sensor 17. When the fuel is air-mixed fuel, the sensor 17 detects an oxygen concentration or a nitrogen concentration in the air-mixed fuel. The sensor 17 is electrically connected to the control unit 11 and outputs detection results to the control unit 11.

The supply amount acquiring unit 101 of the control unit 11 has a function of receiving measurement results of the fuel flow meter 16 to acquire the supply amount of the fuel. The detecting unit 102 of the control unit 11 has a function of acquiring detection results from the sensor 17. The detecting unit 102 of the control unit 11 has a function of acquiring the amount of oxygen or nitrogen in the fuel based on the detection results from the sensor 17.

The correcting unit 104 of the control unit 11 has a function of correcting the error included in the value from the fuel flow meter 16 based on the acquisition results in the supply amount acquiring unit 101 and the detection results in the detecting unit 102 and acquiring the supply amount of the air-containing fuel. The correcting unit 104 acquires the flow rate (the sum of the hydrogen-containing fuel flow rate and the air flow rate) of the air-mixed fuel by correcting the output value of the fuel flow meter 16. The correcting unit 104 performs correction based on air concentration error data of the fuel flow meter 16 stored in advance.

The calculating unit 103 of the control unit 11 has a function of calculating the amount of the hydrogen-containing fuel and the air contained in the fuel based on the detection results of the detecting unit 102 and the supply amount of the fuel corrected by the correcting unit 104. Specifically, the calculating unit 103 of the control unit 11 can calculate the accurate air amount in the air-mixed fuel using the accurate flow rate of the air-mixed fuel acquired by the correcting unit 104, the detection results of the detecting unit 102, and the air concentration data stored in advance. The control unit 11 stores data indicating how much oxygen or nitrogen is contained in the air. The calculating unit 103 of the control unit 11 can calculate the proportion of the air flow rate to the entire flow rage of the air-mixed fuel by checking the detection results for the data.

The adjusting unit 105 of the control unit 11 has a function of adjusting the flow rate of fuel in relation to the hydrogen generating unit 4 according to the amount of air contained in the fuel. When fuel made up of hydrogen-containing fuel only is compared with air-mixed fuel, even if the fuel flow rate is the same, the flow rate of hydrogen-containing fuel included in the air-mixed fuel is smaller by the amount of the air flow rate. Thus, the adjusting unit 105 of the control unit 11 adjusts the flow rate of the fuel from the hydrogen-containing fuel supply unit 7 so that a desired flow rate of the hydrogen-containing fuel is obtained. The adjusting unit 105 of the control unit 11 can control the fuel flow rate by feeding back the corrected detection results of the fuel flow meter 16. Further, since oxygen is contained in the air-mixed fuel, it is necessary to consume the oxygen. The mixing of oxygen brings about the need to secure hydrogen-containing fuel for consuming oxygen. Thus, the adjusting unit 105 of the control unit 11 has a function of adjusting the flow rate of the fuel of the hydrogen-containing fuel supply unit 7 by taking the amount of air-containing fuel necessary for consuming oxygen in the fuel, into consideration. The adjusting unit 105 of the control unit 11 1 can adjust the hydrogen-containing fuel supply unit 7 so that the amount of the hydrogen-containing fuel corresponding to the flow rate required for the heat independent operation of the fuel cell system 1 can be supplied. The adjusting unit 105 can also perform adjustment by taking the flow rate of the hydrogen-containing fuel necessary for consuming oxygen in the fuel, into consideration.

The abnormality detecting unit 106 of the control unit 11 has a function of detecting an abnormality in the fuel supply according to the amount of air contained in the fuel. Moreover, the abnormality detecting unit 106 of the control unit 11 has a function of interrupting the system when detecting an abnormality in the fuel supply. For example, the abnormality detecting unit 106 of the control unit 11 determines the ratio (air flow rate/fuel flow rate) of oxygen to carbon in the fuel and detects an abnormality in the fuel supply when the ratio exceeds a predetermined threshold value.

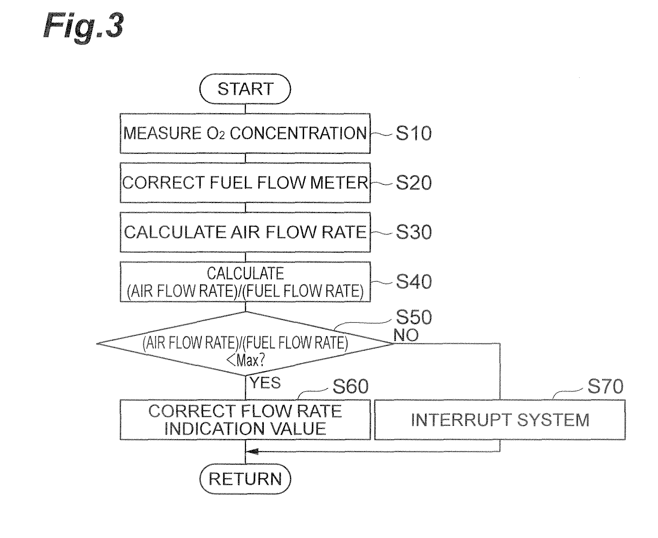

Next, an example of the control process of the fuel cell system 1 according to the present embodiment will be described with reference to Fig. 3. The control process of Fig. 3 shows an example when the fuel supplied from the hydrogen-containing fuel supply unit 7 to the hydrogen generating unit 4 is air-mixed fuel. Fig. 3 shows the process when air is mixed in the hydrogen-containing fuel or when the concentration of air in the fuel changes. The process shown in Fig. 3 is repeatedly executed by the control unit 1 at predetermined points in time.

As shown in Fig. 3, the detecting unlit 102 of the control unit 11 acquires the detection results of the sensor 17 to measure an oxygen concentration in the fuel based on the detection results (step S10). In this case, the detecting unit 102 of the control unit 11 may measure a nitrogen concentration in the fuel. The supply amount acquiring unit 101 of the control unit 11 acquires the fuel flow rate (at this point in time, the flow rate contains an error) based on the detection results of the fuel flow meter 16. The correcting unit 104 of the control unit 11 corrects the value from the fuel flow meter 16 based on the measurement results in step S10 (step S20). The correcting unit 104 acquires the total fuel flow rate which is the sum of the hydrogen-containing fuel flow rate and the air flow rate by correcting the value from the fuel flow meter 16.

Subsequently, the calculating unit 103 of the control unit 11 calculates the flow rate of the air contained in the fuel (step S30). Specifically, the calculating unit 103 of the control unit 11 compares the oxygen concentration measured in step S10 with the data stored in advance for the amount of oxygen (or nitrogen) in the air and calculates the concentration of air in the fuel. The calculating unit 103 of the control unit 11 calculates an air flow rate based on the fuel flow rate accurately corrected in step S20 and the concentration of air in the fuel.

Subsequently, the calculating unit 103 of the control unit 11 calculates the ratio (air flow rate/fuel flow rate) of the air flow rate in the fuel to the fuel flow rate based on the measurement results in step S10 (step S40). The calculating unit 103 of the control unit 11 can calculate the "air flow rate"/"fuel flow rate" using the oxygen concentration in the fuel measured in step S10. When a nitrogen concentration is measured in step S10, the ratio $N_2/O_2$ in the atmosphere is used. The abnormality detecting unit 106 of the control unit 11 determines whether the "air flow rate"/"fuel flow rate" calculated in step S40 is smaller than a predetermined threshold value Max (step S50). When it is determined in step S50 that the "air flow rate"/"fuel flow rate" is equal to or larger than the threshold value Max, the abnormality detecting unit 106 of the control unit 11 determines that the fuel supply is abnormal and executes system interruption (step S70).

When it is determined in step S50 that the "air flow rate"/"fuel flow rate" is smaller than the threshold value Max, the adjusting unit 105 of the control unit 11 corrects a flow rate indication value for the hydrogen-containing fuel supply unit 7 (step S60). In step S60, the adjusting unit 105 of the control unit 11 corrects the flow rate indication value so that a desired amount of hydrogen-containing fuel corresponding to the flow rate required for control of the fuel cell system 1 can be supplied. Moreover, the adjusting unit 105 may correct the flow rate indication value so that the flow rate of the hydrogen-containing fuel required for consuming oxygen contained in the fuel is added (a specific control example will be described later). Moreover, the adjusting unit 105 of the control unit 11 performs flow rate control based on the corrected measurement results of the fuel flow meter 16. That is, the adjusting unit 105 of the control unit 11 controls the hydrogen-containing fuel supply unit 7 based on the accurate fuel flow rate.

When the process of step S60 ends, the control process shown in Fig. 3 ends. In the subsequent control processes, if there is no change in the measurement results of step S10, the oxygen concentration or the nitrogen concentration in step S10 may be repeatedly monitored without executing the processes of steps S20 to S60. Moreover, the control process shown in Fig. 3 may be executed constantly during the operation of the fuel cell system 1 and may be executed periodically in a predetermined period.

Next, a more specific control example of the control process shown in Fig. 3 will be described. Although first, second, and third control examples are illustrated as control examples, the control contents and used expressions are not limited to those of the first to third control examples. Symbols used in the following description will be described. Errors, concentrations, and the like are not percentages but decimal numbers. Moreover, in the following expressions, hydrogen-containing fuel is regarded as hydrocarbon (for example, alcohol or ether in which oxygen, nitrogen, or the like is not bound to molecules).

$F_{init}$: Flow rate indication value to hydrogen-containing fuel supply unit 7 at the start of control
$F_{adj}$: Flow rate indication value to hydrogen-containing fuel supply unit 7 at the end of control
$f_{init}$: Flow rate measurement result of fuel flow meter 16 at the start of control
$f_{init}$: Flow rate easurement result of fuel flow meter 16, corrected by control unit 11 at the start of control
$f_{S20}$: Flow rate measurement result of fuel flow meter 16 at the end of S20
$f_{S20}$: Flow rate measurement result of fuel flow meter 16, corrected by control unit 11 at the end of S20
e: Error included in flow rate measurement result of fuel flow meter 16 determined from measurement value of sensor 17
$a_{S20}$: Air flow rate in fuel at the end of S20
$g_{S20}$: Flow rate of hydrogen-containing fuel in fuel at the end of S20
$g_{tost}$: Flow rate consumed by combustion reaction with air in fuel, among flow rate of hydrogen-containing fuel in fuel at the end of S20

g: Flow rate of hydrogen-containing fuel to be supplied to fuel cell system 1

o: Oxygen concentration in fuel, measured by sensor 17

$C_{O2}$: Oxygen concentration in air

m: Average carbon atom number in hydrogen-containing fuel

n: Average hydrogen atom number in hydrogen-containing fuel

[First Control Example]

In the first control example, the flow rate (which is obtained by subtracting the flow rate of air from the flow rate of air-mixed fuel) of the hydrogen-containing fuel supplied to the hydrogen generating unit 4 is controlled to be identical to the flow rate of the hydrogen-containing fuel required for control of the fuel cell system 1.

<At Start>

At the start of control, an indication value set in the previous process is set as a flow rate indication value ($F_{init}$) to the hydrogen-containing fuel supply unit 7. However, at the initial process, an optional indication value is set. Moreover, the flow rate (g) of hydrogen-containing fuel required for controlling the fuel cell system 1 is set according to the state of the fuel cell system 1 at the start of control. Moreover, the flow rate measurement result ($f_{init}$) of the fuel flow meter 16 at the start of control is acquired. This value "$f_{init}$" includes an error.

<Step S10>

The sensor 17 measures the oxygen concentration in the fuel.

<Step S20>

The error (e) included in the flow rate measurement result of the fuel flow meter 16 is determined based on the oxygen concentration in the fuel. Moreover, the flow rate measurement result of the fuel flow meter 16 is corrected according to Expression (1) in order to adjust the error, and the corrected flow rate measurement result ($f_{init}$) is acquired.

[Equation 1]

$$f'_{init} = \frac{1}{1+e} \times f_{init} \qquad \cdots (1)$$

When the flow rate measurement result of the fuel flow meter 16 is corrected, the accurate flow rate (the total flow rate of hydrogen-containing fuel and air) of the fuel supplied from the hydrogen-containing fuel supply unit 7 is acquired. However, at this point in time, the corrected flow rate measurement result ($f_{init}$) is not identical to the flow rate indication value ($F_{init}$) to the hydrogen-containing fuel supply unit 7. This is because, even when the flow rate indication value ($F_{init}$) at the start of control is transmitted to the hydrogen-containing fuel supply unit 7, the flow rate measurement result of the fuel flow meter 16 does not indicate the accurate flow rate. Thus, the control unit 11 adjusts the hydrogen-containing fuel supply unit 7 so as to match the flow rate measurement result that includes an error. Thus, in the first control example, after the fuel flow meter 16 is corrected, the adjustment of the hydrogen-containing fuel supply unit 7 and the measurement by the fuel flow meter 16 are repeatedly executed until the corrected flow rate measurement result is identical to the flow rate indication value ($F_{init}$) (that is, until the condition of Expression (2) is satisfied).

[Equation 2]

$$f'_{S20} = F_{init} \qquad \cdots (2)$$

<Step S30>

An actual air flow rate ($a_{S20}$) and an actual hydrogen-containing fuel flow rate ($g_{S20}$) in the fuel at the end of step S20 are calculated  according to Expressions (3) and (4) based on the corrected flow rate measurement result ($P_{S20}$) of the fuel flow meter 16 at the end of step S20.

[Equation 3]

$$a_{S20} = \frac{o}{C_{O_2}} \times f'_{S20} \qquad \cdots (3)$$

$$g_{S20} = f'_{S20} - a_{S20} \qquad \cdots (4)$$

<Step S40>

The actual hydrogen-containing fuel flow rate ($g_{S20}$) in the fuel at the end of step S20 is subtracted from the actual air flow rate ($a_{S20}$) in the fuel at the end of steep S20.

<Steps S50 and S70>

It is determined whether the value obtained in step S40 is equal to or larger than a predetermined value. When the value is equal to or larger than the predetermined value, the system is interrupted.

<Step S60>

The flow rate indication value ($F_{adj}$) to the hydrogen-containing fuel supply unit 7 is adjusted according to Expression (8) so that the amount of hydrogen-containing fuel corresponding to the flow rate (g) required for controlling the fuel cell system 1 is supplied. Expression (8) is derived through calculations of Expressions (5) to (7). Since the corrected flow rate measurement result of the fuel flow meter 16 indicates the correct flow rate, the hydrogen-containing fuel supply unit 7 can supply the accurate amount of fuel corresponding to the flow rate indication value ($F_{adj}$).

[Equation 4]

$$F_{adj} = f'_{S20} \times \frac{g}{g_{S20}} \qquad \cdots (5)$$

$$F_{adj} = g \times \frac{f'_{S20}}{g_{S20}} \qquad \cdots (6)$$

$$F_{adj} = g \times \frac{g_{S20} + a_{S20}}{g_{S20}} \qquad \cdots (7)$$

$$F_{adj} = g \times (1 + \frac{a_{S20}}{g_{S20}}) \qquad \cdots (8)$$

[Second Control Example]

In the second control example, similarly to the first control example, the flow rate (which is obtained by subtracting the flow rate of air from the flow rate of air-mixed fuel) of the hydrogen-containing fuel supplied to the hydrogen generating unit 4 is controlled to be identical to the flow rate of the hydrogen-containing fuel required for control of the fuel cell system 1. The second control example is different from the first control example in that the hydrogen-containing fuel supply unit 7 is not adjusted at step S20 but is adjusted at once at step S60.

<At Start>

The same control as "At Start" of the first control example is performed.

<Step S10>

The same control as "Step S10" of the first control example is performed.

<Step S20>

The error (e) included in the flow rate measurement result of the fuel flow meter 16 is determined based on the oxygen concentration in the fuel. Moreover, in order to adjust the error, the flow rate  measurement result of the fuel flow meter 16 is corrected according to Expression (9), and the corrected flow rate measurement result ($f_{init}$) is acquired.

[Equation 5]

$$f'_{init} = \frac{1}{1+e} \times f_{init} \qquad \cdots (9)$$

Here, the hydrogen-containing fuel supply unit 7 is not adjusted. That is, the relations of Expressions (10) and (11) are satisfied.

[Equation 6]

$$f_{S20} = f_{init} \qquad \cdots (10)$$

$$f'_{S20} = f'_{init} \qquad \cdots (11)$$

<Step S30>

Similarly to the first control example, an actual air flow rate ($a_{S20}$) and an actual hydrogen-containing fuel flow rate ($g_{S20}$) in the fuel at the end of step S20 are calculated according to Expressions (12) and (13).

[Equation 7]

$$a_{S20} = \frac{o}{C_{O_2}} \times f'_{S20} \qquad \cdots (12)$$

$$g_{S20} = f'_{S20} - a_{S20} \qquad \cdots (13)$$

<Step S40>

The same control as "Step S40" of the first control example is performed.

<Steps S50 and S70>

The same control as "Steps S50 and S70" of the first control example are performed.

<Step S60>

Similarly to the first control example, the flow rate indication value ($F_{adj}$) to the hydrogen-containing fuel supply unit 7 is adjusted according to Expression (17) so that the amount of hydrogen-containing fuel corresponding to the flow rate (g) required for controlling the fuel cell system 1 is supplied. Expression (17) is derived through calculations of Expressions (14) to (16). Since the corrected flow rate measurement result of the fuel flow meter 16 indicates the correct flow rate, the hydrogen-containing fuel supply unit 7 can supply the accurate amount of fuel corresponding to the flow rate indication value ($F_{adj}$).

[Equation 8]

$$F_{adj} = f'_{S20} \times \frac{g}{g_{S20}} \qquad \cdots (14)$$

$$F_{adj} = g \times \frac{f'_{S20}}{g_{S20}} \qquad \cdots (15)$$

$$F_{adj} = g \times \frac{g_{S20} + a_{S20}}{g_{S20}} \qquad \cdots (16)$$

$$F_{adj} = g \times (1 + \frac{a_{S20}}{g_{S20}}) \qquad \cdots (17)$$

In the second control example, since the hydrogen-containing fuel supply unit 7 is adjusted at once at step S60, it is possible to lessen the calculation load as compared to the first control example. On the other hand, in the second control example, the output state of the hydrogen-containing fuel supply unit 7 based on the flow rate measurement result that includes an error is continued until the process of step S60 ends. That is, the first control example can eliminate the influence of at least the error included in the flow rate measurement result at an earlier step as compared to the second control example.

[Third Control Example]

In the third control example, the flow rate of the hydrogen-containing fuel excluding the amount required for consuming oxygen in the fuel is controlled to be identical to the flow rate (g) of the hydrogen-containing fuel required for controlling the fuel cell system 1 by taking the hydrogen-containing fuel for consuming the oxygen into consideration.

<At Start To Steps S50 and S70>

The same control as "At Start" to "Steps S50 and S70" of the first or second control example is performed.

<Step S60>

A combustion reaction between hydrogen-containing fuel and oxygen is shown in Expression (18).

[Equation 9]

$$C_m H_n + (m + \frac{n}{4}) O_2 \rightarrow m CO_2 + \frac{n}{2} H_2 O \qquad \cdots (18)$$

A portion of the hydrogen-containing fuel among the fuel flow rate (=$f_{S20}$) at the end of step S20 is combusted by the combustion reaction expressed in Expression (18). The flow rate ($g_{lost}$) consumed by the combustion reaction with air in the fuel is derived from Expression (19). Thus, the flow rate of the hydrogen-containing fuel that can contribute to generation of hydrogen in the hydrogen-rich gas is derived from Expression (20).

[Equation 10]

$$g_{lost} = C_{O_2} \times a_{S20} \div (m + \frac{n}{4}) \qquad \cdots (19)$$

$$g_{S20} - g_{lost} = g_{S20} - C_{O_2} \times a_{S20} \div (m + \frac{n}{4}) \qquad \cdots (20)$$

Thus, when the flow rate of the hydrogen-containing fuel excluding the fuel for consuming oxygen is controlled so as to be identical to the flow rate (g) required for controlling the fuel cell system 1, the flow rato indication value ($f_{adj}$) to the hydrogen-containing fuel supply unit 7 is adjusted according to Expression (23). Expression (23) is derived through calculations of Expressions (21) and (22). Since the corrected flow rate measurement result of the fuel flow meter 16 indicates the correct flow rate, the hydrogen-containing fuel supply unlit 7 can supply the accurate amount of fuel corresponding to the flow rate indication value ($F_{adj}$).

[Equation 11]

$$F_{adj} = f'_{S20} \times \frac{g}{g_{S20} - g_{lost}} \qquad \cdots (21)$$

$$F_{adj} = g \times \frac{f'_{S20}}{g_{S20} - g_{lost}} \qquad \cdots (22)$$

$$F_{adj} = g \times \frac{g_{S20} + a_{S20}}{g_{S20} - C_{O_2} \times a_{S20} \div (m + \frac{n}{4})} \qquad \cdots (23)$$

In the third control example, since control is performed by taking the hydrogen-containing fuel for consuming the oxygen contained in the fuel, into consideration, it is possible to supply the hydrogen-containing fuel required for the fuel cell system 1 in a more accurate manner as compared to the first and second control examples. On the other hand, in the case of the third control example, since control is performed such that the hydrogen-containing fuel used for consuming oxygen is supplemented, the generated calorific value is larger than that of the first and second control examples. Thus, the third control example is preferable when control is performed by placing emphasis on the accurate flow rate of the hydrogen-containing fuel, and the first or second control example is preferable when control is performed by placing emphasis on the balance of the heat in the system.

Further calculation may be performed after performing the calculation of the first or second control example to perform control such that the hydrogen-containing fuel for consuming oxygen is supplemented.

Next, the operation and effects of the fuel cell system 1 will be described.

The control unit 11 of the fuel cell system 1 can acquire the accurate fuel flow rate even when the fuel is air-mixed fuel that contains air and hydrogen-containing fuel by correcting the value from the fuel flow meter 16. The control unit 11 can calculate the amount of air contained in the fuel based on the detection results of the sensor 17 that detects oxygen or nitrogen. Thus, when air is contained in the fuel supplied to the hydrogen generating unit 4, the fuel cell system 1 can understand how much air is mixed in the hydrogen-containing fuel in the fuel. The control unit 11 can appropriately adjust the amount of fuel supplied to the hydrogen generating unit 4 according to the amount of air mixed in the fuel. That is, the control unit 11 can correct the value from the fuel flow meter 16 to acquire the accurate flow rate of the air-mixed fuel and can understand the amount of mixed air contained in the fuel. Thus, the control unit 11 can perform control so that the amount of hydrogen-containing fuel required for the heat independent operation is obtained regardless of the amount of air mixed in the fuel. In this manner, the fuel cell system 1 can perform a heat independent operation even when the hydrogen-containing fuel is supplied in a state where air is mixed in the hydrogen-containing fuel.

Moreover, when fuel that contains air is compared with fuel that does not contain air, if the fuel amount is the same, the amount of hydrogen-containing fuel in the fuel that contains air is decreased by the amount of air. The adjusting unit 105 of the control unit 11 of the fuel cell system 1 can adjust the fuel by taking the amount of hydrogen-containing fuel that decreases due to such a reason, into consideration. In this manner, it is possible to reliably supply a required amount of hydrogen-containing fuel when the hydrogen-containing fuel is supplied in a state where air is mixed therein.

Moreover, when air is contained in the fuel, an additional amount of hydrogen-containing fuel for consuming the oxygen in the air is required. The control unit 11 of the fuel cell system 1 can adjust the amount of fuel supplied to the hydrogen generating unit 4 by taking the amount of hydrogen-containing fuel required for consuming the oxygen in the fuel, into consideration. In this manner, the fuel cell system can perform a heat independent operation in a more appropriate manner when hydrogen-containing fuel is supplied in a state where air is mixed  therein.

Moreover, the fuel cell system 1 includes the abnormality detecting unit 106 that detects an abnormality in the fuel supply according to the amount of air contained in the fuel, and the abnormality detecting unit 106 can interrupt the system when detecting an abnormality in the fuel supply. In this manner, it is possible to deal with a situation where too much air is contained in the fuel.

Moreover, the abnormality detecting unit 106 can determine the ratio of the air flow rate to the fuel flow rate obtained by the correcting unit 104 and the calculating unit 103 and detect an abnormality in the power supply when the ratio exceeds a predetermined threshold value. In this manner, it is possible to detect an abnormality in the fuel supply more accurately.

While preferred embodiments of the present invention have been described, the fuel cell system according to the present invention is not limited to the fuel cell system 1 according to the embodiments.

For example, in the example of the control process shown in Fig. 3, although the oxygen concentration is used as the detection result of the sensor 17, a nitrogen concentration may be used, and both the oxygen concentration and the nitrogen concentration may be used.

**Industrial Applicability**

The present invention is applicable to a fuel cell system.

**Reference Signs List**

1: fuel cell system
4: hydrogen generating unit
5: cell stack
11: control unit
16: fuel flow meter (supply amount acquiring unit)
17: sensor (detecting unit)
101: supply amount acquiring unit
102: detecting unit
103: calculating unit
104: correcting unit
105: adjusting unit
106: abnormality detecting unit

**Claims**

**1.** A fuel cell system comprising:

a hydrogen generating unit that generates hydrogen-containing gas using fuel that contains hydrogen-containing fuel;
a cell stack that performs power generation using the hydrogen-containing gas;
a supply amount acquiring unit that acquires a supply amount of the fuel supplied to the hydrogen generating unit;

a detecting unit that is disposed on an upstream side of the hydrogen generating unit so as to detect oxygen or nitrogen in the fuel;

a correcting unit that corrects an error included in a value from the supply amount acquiring unit based on detection results of the detecting unit, and acquires the supply amount of the fuel including the air; and

a calculating unit that calculates an amount of the air contained in the fuel based on detection results of the detecting unit.

2. The fuel cell system according to claim 1, further comprising:

an adjusting unit that adjusts the supply amount of the fuel based on an amount of the air contained in the fuel, wherein

the adjusting unit adjusts the supply amount by taking an amount of the hydrogen-containing fuel that decreases due to the air contained in the fuel, into consideration.

3. The fuel cell system according to claim 1, further comprising:

an adjusting unit that adjusts the supply amount of the fuel based on an amount of the air contained in the fuel, wherein

the adjusting unit adjusts the supply amount by taking an amount of the hydrogen-containing fuel required for consuming the oxygen in the fuel, into consideration.

4. The fuel cell system according to any one of claims 1 to 3, further comprising:

an abnormality detecting unit that detects an abnormality in fuel supply according to an amount of the air contained in the fuel, wherein

the abnormality detecting unit interrupts the system when detecting an abnormality in the fuel supply.

5. The fuel cell system according to claim 4, wherein

the abnormality detecting unit determines a ratio of an air flow rate to a fuel flow rate obtained by the correcting unit and the calculating unit, and detects an abnormality in the fuel supply when the ratio exceeds a predetermined threshold value.

# Fig.1

EP 2 677 583 A1

## Fig.2

CONTROL UNIT 11

| SUPPLY AMOUNT ACQUIRING UNIT | — 101 |

| DETECTING UNIT | — 102 |

| CALCULATING UNIT | — 103 |

| CORRECTING UNIT | — 104 |

| ADJUSTING UNIT | — 105 |

| ABNORMALITY DETECTING UNIT | — 106 |

## Fig.3

```
              ( START )
                  │
  ┌───────────────────────────────────┐
  │ MEASURE O₂ CONCENTRATION │──── S10
  └───────────────────────────────────┘
                  │
  ┌───────────────────────────────────┐
  │ CORRECT FUEL FLOW METER │──── S20
  └───────────────────────────────────┘
                  │
  ┌───────────────────────────────────┐
  │ CALCULATE AIR FLOW RATE │──── S30
  └───────────────────────────────────┘
                  │
  ┌───────────────────────────────────┐
  │            CALCULATE              │──── S40
  │ (AIR FLOW RATE)/(FUEL FLOW RATE) │
  └───────────────────────────────────┘
                  │          S50
                ╱   ╲        NO
  ( AIR FLOW RATE)/(FUEL FLOW RATE) ─────────────┐
              ╲ <Max? ╱                          │
                  │ YES    S60              S70   │
  ┌───────────────────────┐   ┌───────────────────────┐
  │  CORRECT FLOW RATE    │   │   INTERRUPT SYSTEM    │
  │   INDICATION VALUE    │   └───────────────────────┘
  └───────────────────────┘                │
                  │◄───────────────────────┘
              ( RETURN )
```

## INTERNATIONAL SEARCH REPORT

| | International application No. |
|---|---|
| | PCT/JP2012/053302 |

**A. CLASSIFICATION OF SUBJECT MATTER**
*H01M8/04*(2006.01)i, *H01M8/06*(2006.01)i

According to International Patent Classification (IPC) or to both national classification and IPC

**B. FIELDS SEARCHED**

Minimum documentation searched (classification system followed by classification symbols)
H01M8/04, H01M8/06

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-320625 A  (Toshiba Corp.), 12 December 1997 (12.12.1997), claim 1; paragraphs [0001] to [0015], [0036] to [0038]; fig. 1, 2 (Family: none) | 1-5 |
| A | JP 6-260203 A  (Fuji Electric Co., Ltd.), 16 September 1994 (16.09.1994), claims 1, 2; paragraphs [0001] to [0004]; fig. 1 (Family: none) | 1-5 |

☒ Further documents are listed in the continuation of Box C.       ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 April, 2012 (13.04.12) | 24 April, 2012 (24.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

17

**INTERNATIONAL SEARCH REPORT**

| International application No. |
| --- |
| PCT/JP2012/053302 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2006/46621 A1 (Matsushita Electric Industrial Co., Ltd.), 04 May 2006 (04.05.2006), claim 1; paragraph [0006]; fig. 1, 2 & US 2008/0113232 A1 & US 2010/0190070 A1 & CN 101088187 A | 1-5 |
| A | JP 2006-140103 A (Tokyo Gas Co., Ltd.), 01 June 2006 (01.06.2006), claim 1; paragraphs [0018] to [0022]; fig. 1, 4, 5 (Family: none) | 1 |
| A | JP 2008-518870 A (FuelCell Energy, Inc.), 05 June 2008 (05.06.2008), claim 1; paragraphs [0004] to [0005]; fig. 1 & US 2006/0090398 A1 & US 2009/0236265 A1 & EP 1819430 A & WO 2006/049795 A2 & KR 10-2007-0085688 A & CN 101287815 A | 1 |
| A | JP 11-214024 A (Mitsubishi Electric Corp.), 06 August 1999 (06.08.1999), claim 1; paragraphs [0006] to [0007] (Family: none) | 1 |
| A | JP 2008-27752 A (Matsushita Electric Industrial Co., Ltd.), 07 February 2008 (07.02.2008), paragraphs [0015] to [0016] (Family: none) | 1 |
| A | JP 63-259970 A (Fuji Electric Co., Ltd.), 27 October 1988 (27.10.1988), claims; page 1, lower right column, line 18 to page 2, upper left column, line 2 (Family: none) | 1 |

Form PCT/ISA/210 (continuation of second sheet) (July 2009)

**EP 2 677 583 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9320625 A